# EUROPÄISCHE PATENTSCHRIFT

(11) **EP 0 816 412 B1**
(45) Veröffentlichungstag und Bekanntmachung des Hinweises auf die Patenterteilung: **16.11.2005**
(21) Anmeldenummer: 97109553.4
(22) Anmeldetag: 12.06.1997
(51) Int. Cl.: C08G 59/42, C08G 59/17, C08L 63/10, C08F 299/02

(54) **Verfahren zur Herstellung von Epoxy(meth)acrylaten**
Process for the preparation of epoxy(meth)acrylates
Procédé pour la préparation d'epoxy(meth)acrylate

(30) Priorität: 25.06.1996 DE 19625266
(43) Veröffentlichungstag der Anmeldung: 07.01.1998
(73) Patentinhaber: Bayer MaterialScience AG, 51368 Leverkusen (DE)
(72) Erfinder: Meixner, Jürgen, Dr., 47803 Krefeld (DE)

(56) Entgegenhaltungen:
- EP-A- 0 738 741
- DE-A- 2 547 103

## Beschreibung

Die Erfindung betrifft ein Verfahren zur Herstellung von Epoxy(meth)acrylaten, die als radikalisch aushärtbare Bindemittel zur Herstellung von Überzugsmitteln, Spachtel- und Dichtmassen bzw. zur Herstellung von Formkörpern verwendet werden können.

Epoxy(meth)acrylate, die durch Umsetzung eines Epoxidharzes, z.B. Bisphenol-A-diglycidyl-ether, mit (Meth)Acrylsäure in Gegenwart von Katalysatoren hergestellt werden (z.B. DE-A 2 349 979) sind normalerweise hochviskose Substanzen, die in niedermolekularen Monomeren, wie z.B. Hexandioldiacrylat gelöst werden, um sie weiter zu verarbeiten.

Modifizierte Epoxy(meth)acrylate wurden z.B. durch Umsetzung mit Aminen (DE-A 2 429 527) oder Dicarbonsäuren (DE-A 4 217 761) oder durch Reaktion der bei der Addition von (Meth)-Acrylsäure an die Epoxidgruppe entstehenden OH-Gruppen mit Säureanhydriden (DE-A 4 109 048) oder Isocyanaten (DE-A 3 519 117) hergestellt.

Gegenstand der Erfindung ist ein Verfahren zur Herstellung von Epoxy(meth)-acrylaten durch gleichzeitige Umsetzung von
1 Val mindestens einer Epoxidgruppen aufweisenden organischen Verbindung mit
   A) 0,8 - 1,2 mol mindestens eines organischen Dicarbonsäureanhydrids des Molekulargewichts 98 bis 166
      und
   B) 0,8 - 1,2 Val (bezogen auf OH) mindestens einer OH-Gruppen aufweisenden, unter Einhaltung eines COOH/OH-Äquivalentverhältnisses von 0,6 bis 0,95 hergestellten Umsetzungsprodukts von
      a) (Meth)Acrylsäure
         und
      b) mindestens zwei Ethylen- und/oder Propylenoxideinheiten als Teil einer Etherstruktur aufweisenden, 3- oder 4-wertigen Etheralkoholen des Molekulargewichtsbereichs 180 bis 1000.

Gegebenfalls kann vor oder nach dieser Umsetzung eine Modifizierung mit basischen Stickstoffverbindungen, ausgewählt aus der Gruppe Ammoniak, (cyclo)-aliphatischen, primären oder sekundären Aminen und Gemischen derartiger Basen, in einer Menge von 0 bis 0,3 NH-Äquivalenten pro Epoxidäquivalent durchgeführt werden.

Die Mengen an Ausgangsverbindungen wird so gewählt, daß die Reaktion zu praktisch vollständiger Umsetzung der ursprünglich vorliegenden Epoxidgruppen führt.

Es konnte nicht erwartet werden, daß es möglich sein würde, Polyepoxide mit Dicarbonsäureanhydriden und OH-Verbindungen zu Epoxy(meth)acrylaten umzusetzen, da bekanntermaßen Polyepoxide mit Dicarbonsäureanhydriden unter Vernetzung miteinander reagieren. Diese Reaktion wird z.B. bei der Herstellung von Formteilen benutzt.

Unter Epoxidgruppen aufweisenden Verbindungen werden im Rahmen der vorliegenden Erfindung organische Verbindungen des Molekulargewichtsbereichs Mₙ 130 bis 1000 verstanden, die (im statistischen Mittel) pro Molekül mindestens eine, vorzugsweise 1,5 bis 6 und besonders bevorzugt 1,5 bis 2, Epoxidgruppen enthalten. Ein Epoxidäquivalent bedeutet die Menge einer Epoxidverbindung in Gramm, die ein Mol Epoxidgruppen enthält.

Beispiele geeigneter Epoxidgruppen aufweisender Verbindungen sind insbesondere solche des Epoxidäquivalentgewichtsbereichs 100 bis 500, z.B. sind Polyglycidylether mehrwertiger Phenole wie beispielsweise Brenzkatechin, Resorcin, Hydrochinon, 4,4'-Dihydroxydiphenylmethan, 2,2-Bis-(4-hydroxyphenyl)-propan (Bisphenol A), 4,4'-Dihydroxydiphenylcyclo-hexan, 4,4'-Dihydroxydiphenylsulfon, Tris-(4-hydroxyphenyl)-methan, Novolaken (d.h. aus Umsetzungsprodukten von ein- oder mehrwertigen Phenolen mit Aldehyden, insbesondere Formaldehyd, in Gegenwart saurer Katalysatoren). Bevorzugt sind Polyglycidylether von Bisphenol A.

Weiter seien beispielhaft genannt: Glycidylether von Monoalkoholen wie n-Butanol oder 2-Ethyl-hexanol oder Glycidylether mehrwertiger Alkohole, beispielsweise aus 1,4-Butandiol, 1,4-Buten-diol, 1,6-Hexandiol, Glycerin, Trimethylolpropan, Pentaerythrit und Polyethylenglykolen, Triglycidyl-isocyanurat, Polyglycidylthioether aus mehrwertigen Thiolen, wie beispielsweise aus Bismercaptomethylbenzol oder auch Glycidylester von Monocarbonsäuren wie Versaticsäure oder Glycidylester mehrwertiger, aromatischer, aliphatischer und cycloaliphatischer Carbonsäuren, beispielsweise Phthalsäurediglycidylester, Isophthalsäurediglycidylester, Terephthalsäurediglycidylester, Tetrahydrophthalsäurediglycidylester, Adipinsäurediglycidylester und Hexahydrophthalsäurediglycidylester.

Bei den Dicarbonsäureanhydriden A) handelt es sich um gesättigte, aromatische oder ungesättigte, (cyclo)aliphatische Dicarbonsäureanhydride mit 4 bis 9 Kohlenstoffatomen wie beispielsweise die Anhydride von Maleinsäure, Bernsteinsäure, Phthalsäure, Tetrahydrophthalsäure, Hexahydrophthalsäure oder Norbomendicarbonsäure.

Bei der Komponente B) handelt es sich um OH-Gruppen aufweisende, unter Einhaltung eines COOH/OH-Äquivalentverhältnisses von 0,6 bis 0,95, vorzugsweise 0,65 bis 0,90, hergestellte Umsetzungsprodukte aus a) (Meth)Acrylsäure und b) 3- und/oder 4-wertigen Ethergruppen aufweisenden Alkoholen des Molekulargewichtsbereichs 180 bis 1000, die mindestens zwei Ethylen-und/oder Propylenoxideinheiten als Teil einer Etherstruktur und 3 oder 4 alkoholische Hydroxylgruppen aufweisen oder um deren Gemische. Derartige Etheralkohole werden durch Alkoxylierung von geeigneten Startermolekülen in an sich bekannter Weise erhalten. Geeignete Startermoleküle sind insbesondere die den Etheralkoholen entsprechenden Ethergruppen-freien 3- oder 4-wertigen Alkohole, wie beispielsweise Glycerin, Trimethylolpropan, Trimethylolethan, Pentaerythrit oder beliebige Gemische derartiger mehrwertiger Alkohole. Die zum Einsatz gelangenden Etheralkohole weisen im allgemeinen einen Alkoxylierungsgrad von 2 bis 20, vorzugsweise von 2 bis 15 auf, wobei der Alkoxylierungsgrad die Anzahl der Mole Ethylen- und/oder Propylenoxid angibt, die an 1 mol eines als Startermolekül verwendeten Alkohols im Durchschnitt addiert worden sind.

Die Umsetzung zwischen den Komponenten a) und b) erfolgt nach bekannten Methoden, z. B. durch Azeotropveresterung von (Meth)Acrylsäure mit den Etheralkoholen.

Die Reaktion der Epoxide mit den Verbindungen A) und B) erfolgt in einem Schritt beispielsweise nach dem Verfahren der DE-OS 2 429 527 oder DE-A 2 534 012 in Substanz oder in Lösungsmittel. Geeignete Lösemittel sind beispielsweise inerte Lösungsmittel, wie Butylacetat, Toluol, Cyclohexan, Gemische derartiger Lösemittel oder aber auch copolymerisierbare Monomere der nachstehend beispielhaft genannten Art. Vorzugsweise werden keine Lösemittel oder Monomere eingesetzt.

Die Umsetzung wird im allgemeinen in Gegenwart von etwa 0,01 - 3 Gew.-%, bezogen auf Ausgangsepoxid, an Katalysatoren, wie tert. Amine, quartäre Ammoniumsalze, Alkalihydroxide, Alkalisalze organischer Carbonsäuren, Mercaptane, Dialkylsulfide, Sulfonium-, Phosphoniumverbindungen oder Phosphine, durchgeführt. Besonders bevorzugt ist die Verwendung von quartären Ammoniumsalzen, wie z. B. Triethylbenzylammoniumchlorid.

Die Umsetzung erfolgt bei 20 - 120°C, vorzugsweise 40 - 90°C.

Bei den gegebenenfalls einzusetzenden Stickstoffverbindungen handelt es sich um Ammoniak und/oder bevorzugt um (cyclo)aliphatische primäre und/oder sekundäre Mono- oder Polyamine des Molekulargewichtsbereichs 31 bis 300.

Beispiele für primäre Amine sind insbesondere Mono- und Diamine, wie Methylamin, n-Butylamin, n-Hexylamin, 2-Ethylhexylamin, Cyclohexylamin, Ethanolamin, Benzylamin, Ethylendiamin, die isomeren Diaminobutane, die isomeren Diaminohexane oder 1,4-Diamino-cyclohexan.

Beispiele für sekundäre Amine sind Dimethylamin, Diethylamin, Diethanolamin, Diisopropanolamin, N-Methylethanolamin oder N-Cyclohexylisopropylamin.

Auch die Reaktion der Epoxidgruppen mit den Stickstoffverbindungen kann in Substanz oder in Lösemitteln der bereits beispielhaft genannten Art erfolgen, wobei die Reaktion in Substanz bevorzugt ist. Die Reaktionstemperatur liegt bei 20 - 120°C, vorzugsweise 40 bis 90°C.

Bei der Durchführung des Verfahrens werden alle ursprünglich vorhandenen Epoxidgruppen im wesentlichen abreagiert.

Um die polymerisierbaren, erfindungsgemäßen Reaktionsprodukte vor unerwünschter vorzeitiger Polymerisation zu bewahren, empfiehlt es sich, bereits bei der Herstellung 0,001 - 0,2 Gew.-%, bezogen auf das gesamte Reaktionsgemisch, inklusive Hilfs- und Zusatzmitteln, an Polymerisationsinhibitoren oder Antioxidantien zuzusetzen wie z.B. Phenole und Phenolderivate, vorzugsweise sterisch gehinderte Phenole. Weitere geeignete Stabilisatoren sind in "Methoden der organischen Chemie" (Houben-Weyl), 4. Auflage, Band XIV/1, S. 433 - 452, 756, Georg Thieme Verlag, Stuttgart, 1961, beschrieben. Sehr gut geeignet sind z.B. 2,6-Di-tert.-butyl-p.-kresol und/oder Hydrochinonmonomethylether oder Phenothiazin.

Die erfindungsgemäßen Reaktionsprodukte können ohne Zusatz copolymerisierbarer Monomerer oder Lösemittel zur Anwendung gelangen. Gegebenenfalls können sie natürlich auch mit copolymerisierbaren Monomeren oder mit inerten Lösungsmitteln verdünnt werden

Geeignete copolymerisierbare Monomere sind beispielsweise Di- und Polyacrylate sowie Di- und Polymethacrylate von Glykolen mit 2 bis 6 C-Atomen und Polyolen mit 3 - 4 Hydroxylgruppen und 3 bis 6 C-Atomen, wie Ethylenglykoldiacrylat, Propandiol-1,3-diacrylat, Butandiol-1,4-diacrylat, Hexandiol-1,6-diacrylat, Trimetlnylolpropantriacrylat, Pentaerythrittri- und -tetraacrylat sowie entsprechende Methacrylate, ferner Di(meth)-acrylate von Polyetherglykolen des Glykols, Propandiol-1,3, Butandiol-1,4, Triacrylate der Umsetzungsprodukte aus 1 mol Trimethylolpropan und 2,5 bis 5 mol Ethylenoxid und/oder Propylenoxid, Tri- und Tetraacrylate der Umsetzungsprodukte aus 1 mol Pentaerythrit und 3 bis 6 mol Ethylenoxid und/oder Propylenoxid. Weitere copolymerisierbare Monomere sind z.B. aromatische Vinylverbindungen wie Styrol, Vinylalkylether wie Vinylbutylether oder Triethylenglykoldivinylether und Allylverbindungen wie Triallylisocyanurat.

Auch Lösemittel wie beispielsweise Aceton, Ethylmethylketon oder Cyclohexanon können während der Umsetzung oder im Anschluß als Verdünnungsmittel verwendet werden.

Die erfindungsgemäßen Produkte bzw. ihre Mischungen mit anderen copolymerisierbaren Monomeren stellen wertvolle mittels energiereicher Strahlung, wie UV-Licht, Elektronen- oder Gammastrahlen aushärtbare Systeme dar. Die Aushärtung kann auch in Gegenwart von Radikale liefernden Substanzen wie (Hydro)Peroxide, gegebenenfalls in Gegenwart von Beschleunigern, erfolgen.

Bevorzugt werden die erfindungsgemäßen Reaktionsprodukte als oder zur Herstellung von durch UV-Licht härtbare Überzugsmassen eingesetzt, wobei ihr besonderer Vorteil darin liegt, daß sie auch in Gegenwart von Luftsauerstoff in sehr kurzen Zeiten aushärten. Dabei ist der Zusatz von Fotoinitiatoren erforderlich.

Als Fotoinitiatoren sind die üblicherweise eingesetzten Verbindungen geeignet, wie sie z. B. in "Methoden der organischen Chemie" (Houben-Weyl), Band E 20, Seite 80 ff., Georg Thieme Verlag, Stuttgart 1987, beschrieben sind.

Gut geeignet sind z.B. Benzoinether wie Benzoinisopropylether, Benzilketale, wie z.B. Benzildimethylketal und Hydroxyalkylphenone, wie z.B. 1-Phenyl-2-hydroxy-2-methylpropan-1-on, sowie Benzophenon und dessen Derivate.

Die erwähnten Fotoinitiatoren, die je nach Verwendungszweck der erfindungsgemäßen Produkte in Mengen zwischen 0,1 bis 10 Gew.-%, vorzugsweise 0,1 bis 5 Gew.-%, bezogen auf das Gewicht der erfindungsgemäßen Reaktionsprodukte und der gegebenenfalls zugesetzten copolymerisierbaren Monomeren, eingesetzt werden, können als einzelne Substanz oder, wegen häufiger vorteilhafter synergistischer Effekte, auch in Kombination miteinander verwendet werden.

Besonders bevorzugt werden die erfindungsgemäßen Produkte als Bindemittelkomponente für Beschichtungsmittel zur Beschichtung der unterschiedlichsten Substrate, wie z.B. Papier, Kartonage, Leder, Holz, Kunststoffe, Vlies, Textilien, keramische Materialien, wie z. B. mit fotografischer Schicht versehenes Papier und als Bindemittel für Formmassen eingesetzt. Ferner können die erfindungsgemäßen Produkte als Bindemittel für radikalisch härtbare Spachtel- oder Dichtmassen der an sich bekannten Art eingesetzt werden.

### Beispiele

Alle Prozent-Angaben beziehen sich auf das Gewicht.

### OH-Gruppen aufweisende Komponenten B)

Die in Tabelle 1 genannten Mengen an Rohstoffen werden zusammen mit 1,5 % p.-Toluolsulfon-säure, 0,3 % p.-Methoxyphenol und 0,02 % 2,5-Di-tert.-butyl-hydrochinon, jeweils bezogen auf die Summe a) und b), 70 %ig in Cyclohexan gelöst und unter Rühren und Durchleiten von Luft auf Rückflußtemperatur aufgeheizt. Die Mischung wird so lange bei starkem Rückfluß gehalten, bis eine Säurezahl kleiner 5 (mg KOH/g Substanz) erreicht ist. Nach Abkühlen auf 50°C wird Vakuum angelegt und das Cyclohexan abdestilliert.

**Tabelle 1**

| **Komponente B)** | **B1** | **B2** | **B3** |
|---|---|---|---|
| Ausgangsmaterialien (Mol) | | | |
| Acrylsäure (Komponente a) | 2,0 | 2,6 | 2,6 |

| Komponente b) | | | |
|---|---|---|---|
| 12fach ethoxyliertes Trimethylolpropan | 1,0 | | |
| 4fach ethoxyliertes Trimethylolpropan | | 1,0 | |
| 3fach propoxyliertes Trimethylolpropan | | | 1,0 |
| Säurezahl (mg KOH/g Substanz) | 4,5 | 4,5 | 3,5 |
| Viskosistät (mPa.s/23°C) nach DIN 53019/1 | 180 | 140 | 145 |

### Beispiele 1 - 4

Die in Tabelle 2 genannten Mengen an Polyepoxid, Komponente A) und Komponente B) sowie 0,1 % Di-tert.-butyl-p.-kresol und 0,5 % Triethylbenrylammoniumchlorid werden unter Rühren und Durchleiten von Luft auf 80°C geheizt bei dieser Temperatur gehalten, bis eine Säurezahl < 5 (mg KOH/Substanz) erreicht ist.

**Tabelle 2**

| **Beispiele** | **1** | **2** | **3** | **4** |
|---|---|---|---|---|
| Ausgangsmaterialien (Val) | | | | |
| Komponente A | | | | |
| Maleinsäureanhydrid | 1,0 | | 1,0 | 1,0 |
| Phthalsäureanhydrid | | 1,0 | | |

| Komponente B (Val OH) | | | | |
|---|---|---|---|---|
| B1 | 1,0 | | | |
| B2 | | 1,0 | 1,0 | |
| B3 | | | | 1,0 |
| Bisphenol-A-diglycidylether (Epoxidäquivalent: 190) | 1,0 | 1,0 | 1,0 | 1,0 |
| Viskosität (mPa.s/23°C) nach DIN | 50 100 | 14 200 | 11 500 | 19 700 |
| DIN 53019/1 | | | | |

## Patentansprüche

1. Verfahren zur Herstellung von Epoxy(meth)acrylaten durch gleichzeitige Umsetzung von
1 Val mindestens einer Epoxidgruppen aufweisenden organischen Verbindung mit
A) 0,8 - 1,2 mol mindestens eines organischen Dicarbonsäureanhydrids des Molekulargewichts 98 bis 166
und
B) 0,8 - 1,2 Val (bezogen auf OH) mindestens einer OH-Gruppen aufweisenden, unter Einhaltung eines COOH/OH-Äquivalentverhältnisses von 0,6 bis 0,95 hergestellten Umsetzungsprodukts von
a) (Meth)Acrylsäure
und
b) mindestens zwei Ethylen- und/oder Propylenoxideinheiten als Teil einer Etherstruktur aufweisenden, 3- oder 4-wertigen Etheralkoholen des Molekulargewichtsbereichs 180 bis 1000.

## Claims

1. A process for the preparation of epoxy(meth)acrylates by simultaneous reaction of
1 equ of at least one organic compound having epoxide groups with
A) 0.8 - 1.2 mol of at least one organic dicarboxylic anhydride having a molecular weight from 98 to 166
and
B) 0.8 - 1.2 equ (based on OH) of at least one reaction product having OH groups and prepared whilst maintaining a COOH/OH equivalent ratio of 0.6 to 0.95, of
a) (meth) acrylic acid
and
b) tri- or tetrahydric ether alcohols having at least two ethylene- and/or propylene oxide units as part of an ether structure in a molecular weight range from 180 to 1000.

## Revendications

1. Procédé de préparation d'époxy(méth)acrylates par mise en réaction simultanée de
1 Eq d'au moins un composé organique présentant des groupes époxyde avec
A) 8 - 1,2 mole d'au moins un anhydride organique d'acide dicarboxylique de poids moléculaire 98 à 166
et
B) 0,8 - 1,2 Eq (par rapport à l'OH) d'au moins un produit de réaction présentant des groupes OH et préparé en maintenant un rapport des équivalents COOH/OH de 0,6 à 0,95
a) d'acide (méth)acrylique
et
b) d'au moins deux unités éthylène- et/ou propylèneoxyde comme partie d'un éther-alcool tri- ou tétravalent présentant une structure éther d'un poids moléculaire de 180 à 1000.
